# EUROPEAN PATENT SPECIFICATION

(11) **EP 1 251 083 B1**
(45) Date of publication and mention of the grant of the patent: **22.09.2004**
(21) Application number: 99959420.3
(22) Date of filing: 02.12.1999
(51) Int. Cl.: B65G 1/04, B65G 47/46

(54) **AUTOMATED SYSTEM FOR HANDLING PALLETIZED MERCHANDISE**
AUTOMATISCHES SYSTEM ZUR HANDHABUNG VON PALLETISIERTEN WAREN
SYSTEME AUTOMATISE DE MANIPULATION DE MARCHANDISES PALETTISEES

(43) Date of publication of application: 23.10.2002
(73) Proprietor: Sociedad Anonima Damm, 08025 Barcelona (ES)
(72) Inventor: MARIN, Pedro, E-08025 Barcelona (ES)
(74) Representative: Elzaburu, Alberto de
(86) International application number: PCT/ES1999/000390
(87) International publication number: WO 2001/040082

(56) References cited:
- EP-A1- 0 458 722
- ES-A1- 8 305 271
- FR-A1- 2 623 472
- US-A- 3 734 310
- US-A- 4 328 545

## Description

### Field of the Invention

This invention refers to a computerised system for handling palletised goods in the dispatch, supply and storage areas of a factory or a goods distribution centre.

### Background of the Invention

To tackle the problems related to the handling of goods arranged on pallets or other type of container in the logistic facilities or factories and distribution centres, different technical solutions have been proposed for the two basic types of operation carried out in these facilities: the transport of containers or pallets inside them and their loading/unloading on trains or trucks.

Hence, for example, for the transport of containers and pallets inside factories or distribution centres, proposals are known like those described, for example, in the patents US 4.950.118, on which the preamble of claim 1 is based, and 5.202.832, based on the use of automatically guided vehicles instead of forklift trucks driven by persons who, currently, are probably the means of transport more often used.

Particularly, with respect to the loading/unloading operations of goods in/from trucks, on the one hand devices are known which are incorporated to the trucks themselves to facilitate said operations and, on the other, automatic load transfer devices between a truck and a loading/unloading device foreseen for such a purpose, like those described in patent GB 2126189.

However, no proposal reaching a complete computerisation of the handling operations of palletised goods in the dispatch, supply and storage areas of a factory or goods distribution centre, necessary to fulfil predetermined logistic goals is known.

### Summary of the Invention

This invention provides a completely computerised system to perform the palletised goods handling operations in plants or warehouses, necessary to reach the desired logistic targets. Said computerisation helps one of the desirable targets of all logistic system to be reached: swiftness in goods handling operations. Besides, the system, purpose of this invention, automatically provides all the relevant information for an effective logistic management -the other basic goal of these systems- by means of the automatic recording of the relevant information of all the physical handling operations of goods; the suitable exploitation of this information permits the basic logistic management tasks of orders, supply management and stock management to be optimised. Particularly, it allows a complete follow-up of all pallet movements.
The system uses four types of physical devices for goods handling:
. An automatically guided vehicle fleet.
. A plurality of palletised end-product delivery devices (related to the final part of the plant production assembly lines) to the automatically guided vehicles.
. A plurality of palletised supply reception devices (related to the initial part of the plant production lines) transported by the automatically guided vehicles.
. A plurality of loading/unloading docks including, at least, a truck or other type of vehicle loading/unloading device, in a single operation and auxiliary goods feeding/evacuation devices.

By using such devices, the system includes means so that:
. The automatically guided vehicle fleet performs the movements necessary inside the plant for the dispatch/reception of the palletised goods.
. The loading docks perform the operations necessary for loading/unloading a truck.
. All the physical location changes of the pallets in the mentioned operations are recorded.
The aforementioned means include a Central Operation Unit consisting of a computerised server, with processing devices to automatically exchange messages with Management and Control Units of the guided vehicle fleet, of the loading/unloading docks and the goods delivery/reception devices, said units consisting of programmable robots. These messages basically include information of the operational status of the mentioned devices, from a predetermined list, which are provided to the Central Operation Unit by the mentioned Management and Control Units; operation orders transmitted by the Central Operation Unit to said Management and Control Units; and information transmitted by these units regarding the execution of said orders.

The system also includes sensor devices related to the loading docks and goods delivery/reception devices transmitting signals regarding the presence/absence of pallets in them, to the respective Management and Control Units and/or directly, to the Central Operation Units.

Among the processing devices of the Central Operation Unit, the following means are included:
. Identification of the movement requirements of the automatically guided vehicles as from the status information of the loading/unloading docks and the goods delivery/reception devices and the determination of their origin/destination by applying pre-established logistic rules.
. Registration of pallet location changes by means of the information received regarding the execution of operation orders, as from the information provided by an reading EAN128 labels, stuck to the pallets, in their entry points to the system.
. The programmed configuration of the temporary storage areas assigning lanes to types of specific pallets and within each lane, locations identified by means of co-ordinates, for each pallet, it being possible to dynamically change said allocations for each pallet, according to requirements.

The system also includes specific goods delivery/reception device configurations and, particularly:
. The use of piling/unpiling devices in the goods delivery/reception devices to form/undo that pallet grouping foreseen for each product as a transport unit of the automatically guided vehicles.
. The use, in the loading/unloading docks, of two parallel lanes, configuring one of them to be a loading route and the other as an unloading route, such as to accelerate in this manner the sequential unloading/loading operation of a truck.
. The system of the invention, is particularly applicable to logistic systems, like that of a company manufacturing beer, where the distribution of goods between plants and distribution centres may be implemented on the basis of trucks or another type of vehicle, loaded, to a great extent, with the same type of goods.

### Description of the Figures

Figure 1 is a schematic plan view of the part of a plant where the goods handling system, purpose of this invention, is applied.

Figures 2a and 2b are schematic plan views of a preferable configuration of the palletised goods delivery/reception devices.

Figure 3 shows a piling cycle in a palletised goods delivery device.

Figure 4 is a schematic plan view of a loading/unloading dock configuration.

Figure 5 is a schematic plan view of an alternate loading/unloading dock configuration.

Figure 6 shows in a block diagram, the information flows exchanged between the Central Operation Unit, the Management and Control Units of the physical devices and the sensor units related to these devices.

Figure 7 is a diagram of the basic tasks performed by the Central Operation Unit.

Figure 8 shows the temporary storage areas used in the system.

### Detailed Description of the Invention

In the following lines, we will explain a detailed embodiment of the goods handling system, according to the invention, for a beer plant. In this type of plant, the production facilities are normally configured so that the production line receives the necessary supplies and delivers the end products in a palletised form, such that goods handling systems are used based on the use of forklift trucks, to transfer said pallets between the initial or end parts of the production line, temporary storage areas and docks for loading/unloading vehicles, normally trucks. The organisation of these operations is related to the fulfilment of specific logistic goals and in this sense, as a support, to a greater or lesser extent, computerised warehouse management systems are used.

Using the system of this invention, on the one hand, total computerisation of the handling operations of goods is provided which should be made both for dispatch outside of the production plant and to feed the production line with the supplies required, naturally including the temporary storage necessary for one or another type of goods. On the other hand, said computerisation is directed towards the fulfilment of specific logistic targets, involving the complete integration of the physical goods handling operation execution within the framework of a logistic system which, finally, may know at any time, the location of the goods produced or stored, in order to assign them the appropriate destination.

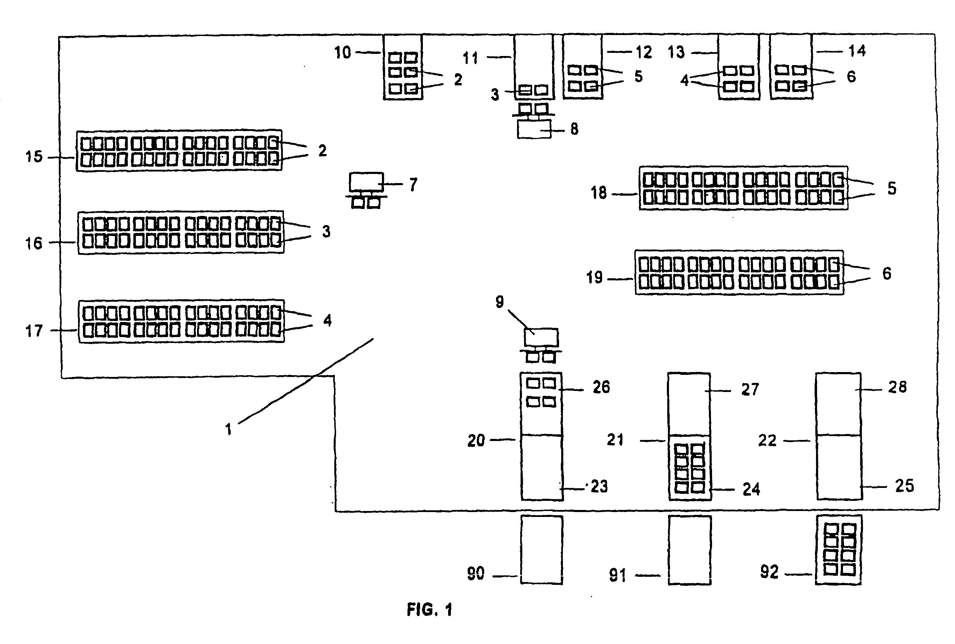

A better understanding of these targets may be made by following figure 1 in which it may be observed that the goods handling area to which the system of this invention is applied in beer plant, is an area 1, where the final or initial parts of the production lines of the different goods are located, consisting of pallet delivery devices 10, 11, 13 in which, the end plant products are arranged on pallets and reception devices for pallets 12, 14 where the supplies are received. As an example, it may be considered that device 10 dispatches pallets 2 with cans of beer, that device 11 delivers pallet 3 with bottles of beer, that device 13 dispatches pallet 4 with barrels of beer, that device 12 receives pallet 5 with empty bottles and device 14, receives pallet 6 with empty barrels.

According to the system, the pallets arranged on the delivery devices 10, 11, 13 are transferred by automatically guided vehicles 7, 8, 9, either to the loading/unloading docks 20, 21, 22 to be loaded on trucks 90, 91, 92 and dispatched to their destination, to the temporary storage areas 15, 16, 17, 18, 19. In Figure 1, these areas have been represented as storage areas, respectively for pallets of type 2, 3, 4, 5, 6 mentioned above, but the system may dynamically vary said allocations according to requirements.

On the other hand, trucks 90, 91, 92 may bring supplies to the plant, like the aforementioned pallets 5 and 6 with returnable bottles and barrels, which will be unloaded from the trucks on docks 20, 21, 22 and transferred by the automatically guided vehicles 7, 8, 9 either to the temporary storage areas 15, 16, 17, 18, 19 or to the reception devices 12, 14.

The execution of said operation requires, on the one hand, a specific structuring of the physical devices mentioned and on the other, the arrangement of operation devices thereof to achieve the desired targets.

To facilitate the understanding of the system, first of all we are going to describe its components with the configurations considered preferable for a beer plant, indicating from this very moment that the system, purpose of the invention, includes as may be deduced from the description itself, alternative configurations.

### Delivery and Reception Devices

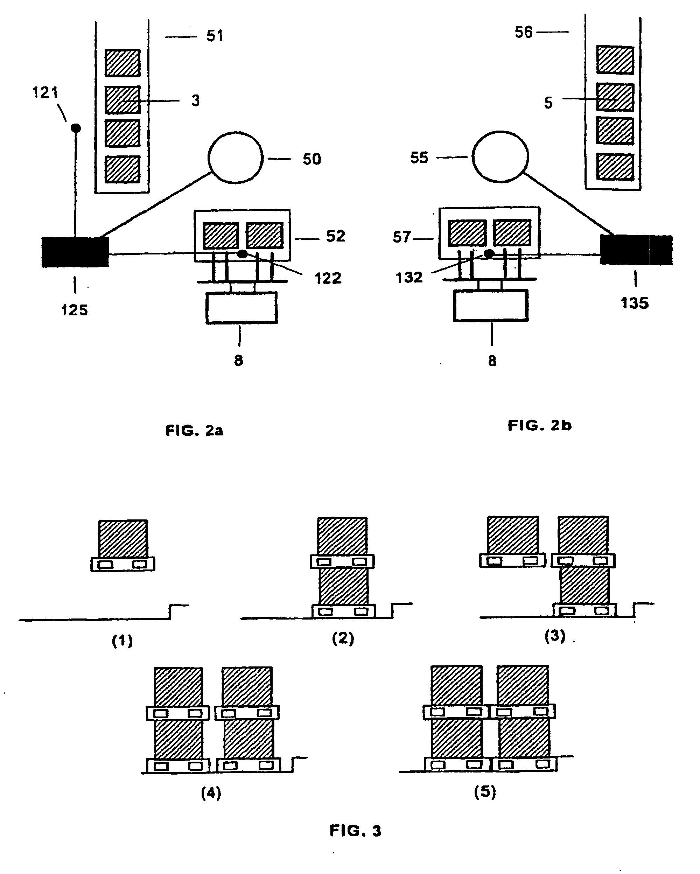

As shown in figure 2a, the pallet delivery devices consist of a pallet piler 50, receiving them from the end part of a production line 51 and piles them on a delivery tray 52 from where they will be taken by an automatically guided vehicle 8. The piler 50, of any type known, is controlled, by a Management Control Unit 124, programmed to execute piling cycles as shown in figure 3, after which four pallets are arranged on the delivery tray 52 arranged in two rows and two columns.

Said Management and Control Unit 125 is connected to reading devices 121 for EAN128 labels previously stuck to the pallets. Among other information, these labels contain a pallet identification code and codes identifying the palletised product and the production batch.

From the standpoint of the system, purpose of this invention, the most important aspects of the Management and Control Unit 125 is its programming for:
. The execution of a specific piling cycle;
. The transmission of messages to the Central Operation Unit 200 regarding the status of tray 52, from a predetermined list such as, for example "Full Tray", "Empty Tray" - producing said information at predetermined moments when programming the device for the piling cycle execution.
. The transmission to the Central Operation Unit 200 of the information read from the labels stuck to each pallet, by means of the reading device 121, providing the system the first information regarding its existence.

Generally speaking, the grouping level of the pallets in delivery device pilers is that corresponding to the predefined transport unit, for each product type, for the movements of automatically guided vehicles. This definition considers, moreover, the external transport means used for product dispatch. Hence, in the example of figure 3, the group of four pallets would be appropriate both for their transport by automatically guided vehicles inside the plant and for their final location on a truck totally occupying its useful section (in width and height).

In the case shown in figure 3, the groups of four pallets prepared by the piler 50 will then be transported, as units, by the automatically guided vehicles to the storage areas 15, 16, 17, 18, 19 or to the loading/unloading docks 20, 21, 22.

One of the important advantages of the system, purpose of this invention, compared with goods handling systems using forklift trucks, is an important increase of the transport unit volume, with the resulting impact on the decrease of the time necessary for loading/unloading trucks.

Finally, the pallet delivery devices include sensor 122 configured in an appropriate way to transmit signals indicating the presence/absence of pallets on the tray 52 so that an automatically guided vehicle 8, may evacuate them and connect them both to the Management and Control Unit 125 and to the Central Operation Unit 200. Said signals are used, on the one hand, by the Management and Control Unit 125 for the initiation of a new piling cycle (when said analogic signals indicate pallet absence) and on the other, by the Central Operation Unit 200 to confirm the tray 52 status information ( Full Tray , Empty Tray) transmitted by the Management and Control Unit 125 as digital messages according to the phase in the piling cycle progress.

The reception devices 12 and 14, as shown in figure 2b consist of a pallet unpiler 55 which unpiles the group deposited on the reception tray 57 by the automatically guided vehicle 8 and delivers them to the initial part of the production line 56. The unpiler 55 is controlled by the Management and Control Unit 135 controlling execution of the unpiling cycle, similar, in a reverse sense, to that shown in figure 3 and which similar to the Management and Control Unit 125 is programmed to transmit digital messages, regarding the reception tray 57 status.

The devices 12 and 14 also include sensor 132 similar to the sensors 122 of the delivery devices.

### Loading and Unloading Docks

With reference to figure 1, the loading/unloading docks 20, 21, 22, basically consist of platforms 23, 24 and 25, permitting loading/unloading operations of a truck in a single operation and carriers 26, 27, 28 to supply pallets to the platforms 23, 24, 25 or to remove them. The situation shown in dock 20 is the preparation of a loading operation in which the automatically guided vehicle 9 deposits pallets on the carrier 26; that shown in dock 21 represents a platform 24, ready to transfer the load to truck 91; finally, the situation on dock 22 is that of a loaded truck 92 prepared to drive to its destination.

Therefore, a truck loading operation, for example, requires, first of all, to transfer the pallets to be loaded on the truck to one of the carriers 26, 27, 28, by means of the automatically guided vehicles 7, 8, 9 which will obtain them either in the delivery devices 10, 11, 13 or in the storage areas 15, 16, 17, 18, 19; secondly, all the carrier load is transferred to the next platform and finally, the truck is loaded from said platform.

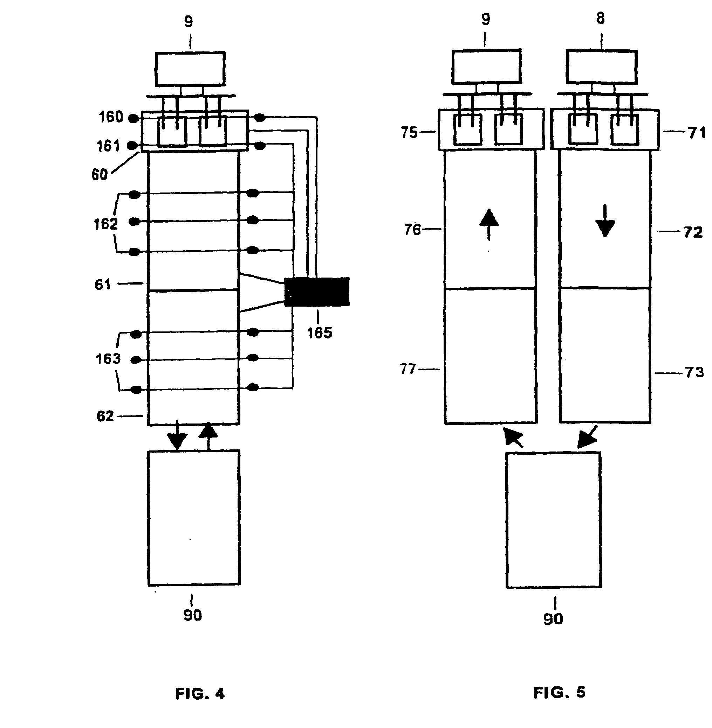

Figure 4 shows a schematic view in greater detail of a preferred configuration of the loading/unloading docks which will be used in this description as from now on.

It may be observed that a loading/unloading dock consists of an entry/exit table 60, for pallet groups, on which automatically guided vehicles 9, a pre-loading/post-unloading bay 61 and a loading/unloading fork 62, which may be introduced in the truck 90 to deliver/remove its load in a single operation, deposit/collect them. In a loading operation, the dock operation would be as follows: the entry table 60 receives a group of pallets from an automatically guided vehicle 9 and transfers it to the preloading bay 61; once the pre-loading bay 61 has received all the groups of pallets necessary to load the truck -in successive reception operations of groups of pallets on the entry table 60 deposited on it by an automatically guided vehicle 9 and transfer thereof to the loading bay 61- it transfers them to the fork 62 which performs the loading operation of the truck 90, being introduced in it, depositing all the pallets and removing them to their initial position. In an unloading operation, the dock would operate in a similar way but in the opposite sense.

This type of dock is known and consists of forks based on devices permitting their entry/exit to the truck 90, to perform complete loading/unloading operations using inflatable/deflatable devices for their displacement in a vertical direction. Docks of this type are commercialised, for example, by the company ALSTOM.

According to the invention, the loading/unloading dock is controlled by a Management and Control Unit 165 programmed to perform the operations mentioned of the entry/exit table 60, the pre-loading/post-unloading bay 61 and the loading/unloading fork 62 and to transmit messages regarding the status of said devices. Therefore, for example, said Management and Control Unit 165 will assure that the entry table 60 only transfers pallets to the bay 61 when it has capacity for it (determining it according to the number of groups of pallets foreseen for each loading operation) and similarly for the remaining operations. On the other hand, the Management and Control Unit 165 will be programmed to transmit messages of the type Empty Bay , Full Bay , Fork ready to transfer load , etc., similar to that occurring in the goods delivery/reception devices.

Said Management and Control Unit 165 may be connected to means 160 to read labels of the EAN128 type, stuck to the goods pallets unloaded from trucks which will only be activated in unloading operations. Alternatively, the Central Operation Unit 200 may obtain the identification information from said pallets by other means.

Likewise, the loading docks include sensors 161, 162, 163 configured to transmit signals identifying the presence/absence of pallets on specific points of the entry/exit table 60, the preloading/post-unloading bay 61 and the loading/unloading fork 62. If in the case of the entry/exit table 60, the configuration of the sensors 161 is orientated to determine their suitability to evacuate/receive goods (it may receive goods from an automatically guided vehicle if empty; may evacuate goods to an automatically guided vehicle if full as foreseen for evacuation, etc.). In the case of the preloading/post-unloading bay 61 and the loading/unloading fork 62, the sensors 162, 163 are configured to detect the presence/absence of pallets, particularly in their end points to assure that the goods transfer operations between bays and forks and between the latter and the truck respond to predetermined situations.

An important aspect of this invention is the possibility of using loading/unloading docks like the one shown schematically in figure 5 in which there would be a loading route consisting of an entry table 71, a pre-loading bay 72 and a loading fork 73, and a parallel unloading route, consisting of an exit table 75, a post-unloading bay 76 and an unloading fork 77 and in each one of them, sensors not shown in figure 5, similar to the aforementioned 161, 162 and 163. With this type of loading/unloading dock, the goal may be reached, particularly important in a beer plant of unloading a truck 90 with, for example, pallets of empty bottles and immediately afterwards, loading it with pallets of any of the products manufactured.

### Automatically Guided vehicles

The automatically guided vehicles used by the system, purpose of this invention, are of the type known using magneto-guided navigation systems, like those commercialised by the company BALLOTTI. Within this type and according to the purposes of this invention, the automatically guided vehicle fleet will have a Management and Control Unit 175 with means to exchange messages with the Central Operation Unit, regarding the vehicle movement orders and their execution status.

### System Control Devices

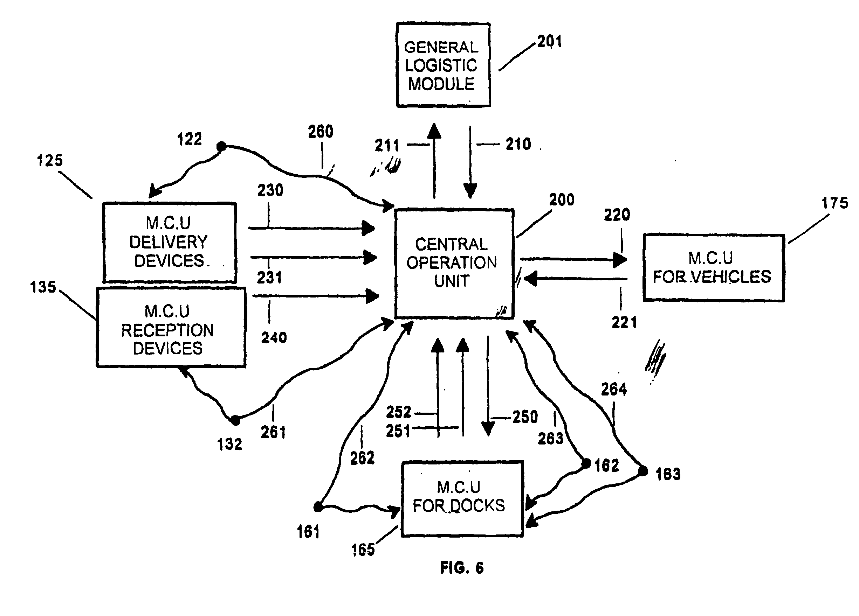

After the description of the physical devices used for handling palletised goods, we will now described the system control devices referring to figure 6.

By following this figure, said means include a Central Operation Unit 200 connected, on the one hand, by means of a data transmission computerised network, with the Management and Control Units 125, 135 of the goods delivery/reception devices 10, 11, 12, 13, 14, with the Management and Control Units 165 of the loading/unloading docks 20, 21, 22, with the Management and Control Unit 175 of the automatically guided vehicles 7, 8, 9 and with a logistic module 201. On the other hand, the Central Operation Unit 200 is directly connected to the sensors 122, 132, 161, 162, 163 by means of ports, not represented in figure 6, which include an analogic-digital converter for the transformation of the analogic signals indicating the presence/absence of pallets in the corresponding devices into digital data.

The mentioned units are equipped with processing means to express it in wide terms, perform the exchange of the following information flows, shown in figure 6, in straight lines when referring to the digital messages transmitted by a data transmission network and on curved lines, when dealing with analogical signals.

The Logistic Module 201 provides the Central Operation Unit 200, an information flow 210 regarding the truck loading/unloading operations to be performed in the loading/unloading docks 20, 21, 22. On the other hand, the Central Operation Unit 200 provides the Logistic Module 3001, information flows 211 with detailed data of the goods handling operations made by the system, for example, to inform clients of the exact status of their orders, analyse stock rotation, etc.

Between the Central Operation Unit 200 and the Management and Control Unit 175, of the automatically guided vehicles 7, 8, 9 information flows 220 are exchanged regarding vehicle movement orders and information flows 221 with respect to the execution status of said orders.

From the Management and Control Units 125 of the goods delivery devices, information flows 230 regarding the pallets with the end products of the plant production lines are sent to the Central Operation Unit 200, obtained from the reading of the EAN128 labels stuck to the pallets and on the other hand, information flows 231 regarding the status of said devices to deliver pallets to the automatically guided vehicles. The control of the pallet delivery devices is not considered necessary, with respect to the execution of the mentioned pallet piling from the Central Operation Unit 200 but devices for such a purpose may be incorporated.

From the Management and Control Units 135 of the goods reception devices, information flows 240 are sent to the Central Operation Unit 200 regarding the status of said devices to receive pallet blocks from the automatically guided vehicles.

Between the Central operation Unit 200 and the Management and Control Units 165 of the loading/unloading docks, information flows 250 are generated with respect to the operation orders from said docks, information flows 250 regarding the status of the different components of said docks and information flows 252 with respect to the pallets received in the plant with supplies received from the trucks, obtained as from the reading of the EAN labels stuck to them.

On the other hand, the Central Operation Unit 200 and the Management and Control Units 125, 135. 165 receive information of the presence/absence of pallets in the different devices by means of the signals 260, 261, 262, 263, 264 sent by the sensors 122, 132, 161, 162, 163.

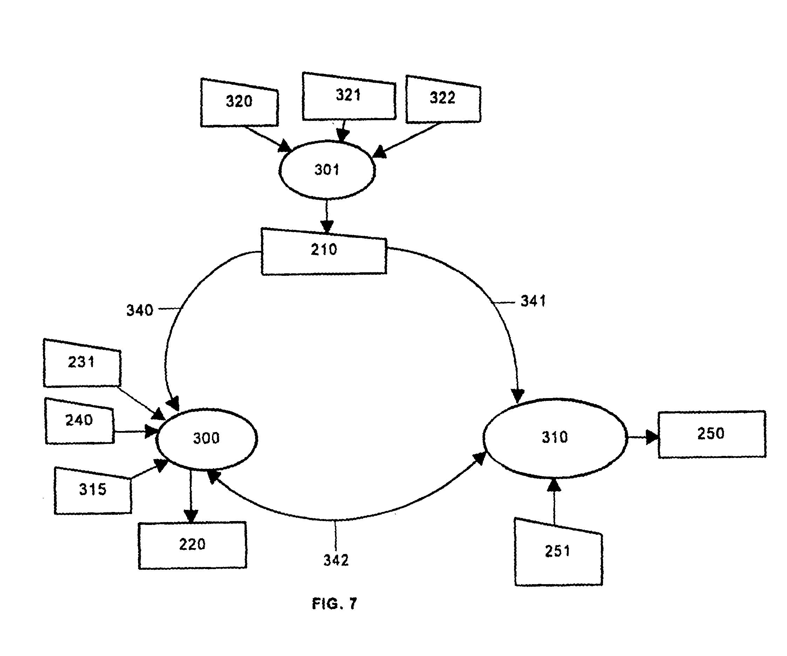

To understand the system better, figure 7 shows, from a logical standpoint, the processing means with which the Central Operation Unit 200 counts and the way in which it uses the information supplied by the other units.

By following this figure, some devices 300 may be observed to provide the movement orders 220 of the automatically guided vehicles necessary to perform certain operations 210, taking into account the information 231, 240 on the status of the goods delivery/reception devices 10, 11, 12, 13,14 and the information 315 regarding warehouse stocks; for purposes of the system, the identification of the operations 210 to be performed, may be executed in any appropriate way and among them, by means of the Logistic Module 201, which, according to that represented in figure 7 would have allocation means 301 to do so as from the information 320 requested from clients, the information 321 on the supplies ordered from the suppliers and the information 322 of the trucks 90, 91, 92 which enter in the plant to load/unload goods.

Secondly, some devices 310 may be seen to provide the loading/unloading docks 20, 21, 22 the operation orders 250, taking into account the status information 251 of said docks. Likewise, figure 7 includes lines 340, 341, 342 to represent the existence of relation between the devices mentioned. In this sense, it should be mentioned that an important aspect of this invention is that in all the goods handling operations performed, the record of information is included and in this way, the system has complete information of the location and contents of any pallet at any time.

To understand the system better, we will describe in detail an example of the operation sequence performed by the system to load a truck, to be carried out by applying the methods mentioned.

Step 1: The Central Operation Unit 200 receives the information of the presence of a truck 90 in the loading dock 20 to be loaded from the Logistic Module 201, for example, with pallets 2 with cans of beer to attend the order of a specific client. In reply to said information, the Central Operation Unit 200 sends a message to the Management and Control Unit 165 of the loading dock 20, so that the latter configures the different dock components for a loading operation in which, for example, the ten pallet blocks would be managed (each one having four pallets in two rows and two columns), necessary to completely load the truck 90.

Step 2. The Central Operation Unit 200 generates a transport order to an automatically guided vehicle 7, such that it carries a block of pallets 2 of cans of beer to the entry table 60 of the loading dock 20.

Step 3. Once the previous order has been executed, the Management and Control Unit 165 of the loading dock 20 transfers the pallet block to the pre-loading bay 61 and informs the Central Operation Unit 200 that the entry table 60 has an "Empty Status".

Step 4. Steps 2 and 3 are repeated until the pre-loading bay 61 is full, identifying said status by means of the Management and Control Unit 165 of dock 20 once the 10 transfer operations of pallet blocks have been made to the pre-loading bay 61 (and the successive transfer of the latter in the bay).

Step 5. The Central Operation Unit 200 receives from the Management and Control Unit 165 of the loading dock 20, the information of "Full Bay" status and sends orders to it to proceed loading the truck 90, transferring, firstly, the 10 pallet blocks to the loading fork 62 after which it informs the Central Operation Unit 200 that the status of the bay is "Empty Bay" (therefore, suitable to initiate a new loading process) and afterwards, introducing the loading fork 62 in the truck and depositing the load.

In the mentioned steps, it is the management and control unit 165 of the loading dock 20 which identifies the status of the entry table 60, the pre-loading bay 61 and the loading fork 62 as a result of the performance of one or other operation and generates the messages, which it sends to the Central Operation Unit 200.

At the same time, the sensors 161, 162, 163 also detect, respectively, the presence/absence of pallets on the entry table 60 and predetermined points of the preloading bay 61 and the loading fork 62 and transmit the corresponding signals to the Central Operation Unit 200 and the Management and Control Unit 165 of the dock permitting the confirmation of the operation orders to the loading dock 20 when the status information transmitted by the Management and Control Unit 165 is consistent with that sent by the corresponding sensors. On the contrary, either the Central Operation Unit 200 or the Management and Control Unit 165 generate an incidence message. A situation of this type would take place, for example, when in the preloading bay, any pallet had been displaced from its position for any reason. For the Management and Control Unit 165 the loading bay would be in the "Full Bay" situation, because it would have controlled the transfer to it of the necessary pallet blocks. However, the sensors 162 would identify the anomaly on not detecting all the pallets in their respective positions. After relocation of the displaced pallet, the sensors 162 would confirm the "Full Bay" status and the Central Operation Unit 200 would transmit the order to transfer the pallets from the pre-loading bay 61 to the loading fork 62.

In the case of using a loading dock like that shown in Figure 5, it is easy to understood that it may be possible that after unloading a truck by means of the unloading fork 77, it is immediately afterwards loaded by loading fork 73 which would have the load foreseen for the truck after the execution of an operation sequence like the one we have described.

Below, we describe in detail, the system means to generate automatically guided vehicle movement orders and to control their execution.

An order of movement to an automatically guided vehicle contains at least the following information.
. Identification of the product to be transferred, for example, pallets 2 of cans of beer to attend a client's order for this product. As the system understands the use of a determined transport unit for each type of product, the simple identification of the product to be transferred identifies the amount of product to be transported.
. Movement origin: either any of the delivery trays 52 on which pallets 2 of cans of beer are produced or the storage space 15 configured in a given moment specifically for pallets 2 of cans of beer.
. Movement destination: either one of the entry tables 60 of the loading/unloading docks 20, 21, 22 waiting for pallets 2 of cans of beer or the storage space 15 foreseen for pallets 2 for cans of beer.
. A movement identifier: to which any later message regarding movement execution will be referred.
. A movement status code, of a pre-established series, to facilitate execution control.

In the case mentioned above for loading a truck, the generation of movement orders of step 3, basically requires identifying the movement origin in an entry device 10, 11, 13 or in a storage space 15. The devices 300 of the Central Operation Unit 200 will perform this task by applying predetermined logistic rules. For example, they may locate the movement origin in the storage space 15 if goods had been reserved for the order being attended by the operation 210 for loading the truck or if the age of the batches located in the storage space 15 recommended their preferable dispatch. They may also be located in the delivery device 10 if the delivery tray 52 of this device where in "Full Tray" status and the criterion will be applied of preferably evacuating the "Full Trays".

In general terms, the status information of the loading docks 20, 21, 22 and the goods delivery/reception devices 10, 11, 12, 13, 14 is the starting information for the generation of a movement order fixing the origin/destination of the movement -and also the nature of the goods to be transported- and are the means 300 of the system which determine destination/origin according to predetermined logistic rules.

On the other hand, once a movement order has been executed, a secondary memory of the Central Operation Unit 200 will record the operation performed with the pallets identifying their new location, allowing the system to have permanently updated information.

Equal to the operations on the loading/unloading docks, the start and termination of a transport movement by the automatically guided vehicles 7, 8, 9 require the consistence of the status information provided by the Management and Control Units 125, 135 of the goods delivery/reception devices 10, 11, 12, 13, 14 and by the Control Units 165 of the entry/exit tables 60 of the loading docks 20, 21, 22 and that provided by the sensors 122, 132, 161 related to said devices.

The movement order that we use as an example, permits another important aspect of the system, purpose of this invention to be illustrated. The storage spaces 15, 16, 17, 18, 19 are configured as lanes assigned to types of specific pallets and within each lane, locations, identified by means of co-ordinates, for each pallet, it being possible to dynamically vary said allocations according to requirements. In this way, said locations may be identified by means of physical co-ordinates provided by the Central Operation Unit 200 to the automatically guided vehicles 7, 8, 9 to identify the origin or destination of a movement in said spaces. On the other hand, the record of each movement operation in the storage spaces allows the system to permanently have information regarding their occupation. The mentioned configuration is programmed according to the storage requirements of the system with the only condition that in one lane at a given moment, only pallets of the same type are stored, being it possible to vary this type in a new configuration.

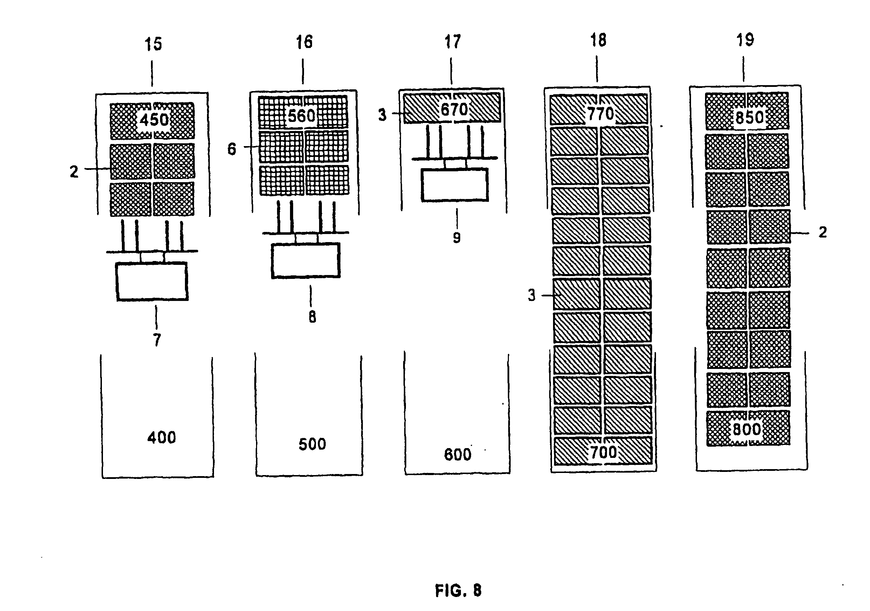

The storage spaces or lanes 15, 16, 17, 18, 19 are foreseen to indistinctly store groups of pallets for the different goods handled in the plant, as illustrated in figure 8 showing a situation in which lanes 15 and 19 are programmed to store pallets 2 of cans of beer in the locations 400 to 450 and 800 to 850; lane 16 is programmed to store pallets 6 with empty barrels of beer in locations 500 to 560 and lanes 17 and 18 are programmed to store pallets 3 of bottles of beer in locations 600-670 and 700-770. It may be observed that the effective width of the lanes corresponds to the width of the respective transport units of each type of product (it being possible to store height-wise, more than one unit) and that the automatically guided vehicles 7, 8, 9 access the lanes by following their central line. Likewise, it is observed that the lanes are sized to adjust to the possible differences of width of different types of pallet. The Central Operation Unit 200 has at any time, as has been said, detailed information of the occupation status of the storage spaces or lanes, including identification of the pallet occupying a specific location and may change the allocation of lanes to types of pallet, according to requirements, such that for example, once the pallets 2 of lane 15 have been evacuated, this lane is assigned to pallets 4 with barrels of beer.

### System Use and Advantages

The logistic system of a beer company includes its plants and several distribution centres from where the goods are generally distributed to clients, although as will be understood, it may also distribute from the plants, especially to major clients. In all these points, a system may be used like that described above, although, in the distribution centres, the delivery and reception devices associated to the production lines would not exist.

Also, the system may be used according to the invention, only in plants, while in the distribution centres, conventional systems would be used.

On the other hand, the handling system in plants may use, together with the automatically guided vehicles, manually operated conventional trolleys, as a means of transport inside the plant. In this case, such trolleys would be equipped, on the one hand, with EAN128 label readers and communication means with the Central Operation Unit 200, for example, radio receiver/transmitters, to provide the system information regarding the automatically guided vehicles, that is, the destination of a transport movement and the identification information of the goods transported (read on the EAN128 labels).

In one case or the other, the respective plant and distribution centre control systems are connected to exchange information such that the logistic management of the company is totally integrated. This exchange of information particularly permits, for example, that a distribution centre may identify the goods sent by a plant from the identification of the truck carrying them and at the same time, a plant may identify the goods sent by a distribution centre -pallets with empty bottles or barrels- by the same means.

Therefore, it should be understood that in relation to the identification of goods unloaded in the plant, in the system according to the invention, either EAN128 label readers located in the unloading docks may be used, as has been mentioned in the previous detailed description of the preferable embodiment of the invention or otherwise use is made of the communications sent by a distribution centre or supplier detailing the truck contents.

An advantage of the system, according to the invention is the use of the goods handling process in the plant. In this sense, it has been proved that the unloading/loading process of a complete truck using the system of the invention is performed in 7 minutes compared with the 35 minutes necessary with the conventional system using manually operated trolleys.

Another advantage is that total traceability of the pallets is achieved, that is, information is available in real time on the situation of all the pallets managed by the logistic system of the company.

Another advantage is that the system provides all the information necessary for the administrative management of the logistic operations (delivery notes, stock reports, etc.) and to achieve desirable goals in all logistic systems (stock minimisation, efficiency in client order attention, etc.).

Although a preferable embodiment of the invention has been described and represented, it is evident that modifications may be introduced within the scope thereof, not considering this as limited by this embodiment, but by the contents of the following claims.

## Claims

1. A computerised system for the handling of palletised goods in a plant or distribution centre having a first subsystem consisting of a fleet of automatically guided vehicles (7, 8, 9) controlled by a Management and Control Unit (175), a second subsystem consisting of several delivery/reception devices (10, 11, 12, 13, 14) of said palletised goods to/from said automatically guided vehicles (7, 8, 9) and a third subsystem consisting of several loading/unloading docks (20, 21, 22), which include, at least, an automatic loading/unloading device (23, 24, 25) for loading/unloading a truck or other type of vehicle in a single operation and entry/exit carriers (26, 27, 28) for the supply/evacuation of goods to/from the mentioned device, **characterised in that** it comprises:
(a) a Central Operation Unit (200) having processing means (300) to send messages (220) regarding movement orders to the Management and Control Unit (175) of the fleet of automatically guided vehicles (7, 8, 9) for performing all loading/unloading operations needed at delivery/reception devices (10, 11, 12, 13, 14) and docks (20, 21, 22), including movements to temporary storage areas (15, 16, 17, 18, 19) and to receive messages (221) regarding the execution of said movement orders.
(b) Management and Control Units (125, 135) of said delivery/reception devices (10, 11, 12, 13, 14) having means for registering each loading/unloading operation ordered by said Central Operating Unit (200) to/from an automatically guided vehicle (7,8,9), means for registering the identification of the pallets loaded/unloaded in said operation and communication means for sending to said Central Operation Unit (200) messages (231, 240) regarding the suitability of said devices (10, 11, 12, 13, 14) for new loading/unloading operations and messages (230) regarding the identification of the pallets involved in said operation;
(c) Management and Control Units (165) of said docks (20, 21, 22) having means for registering each loading/unloading operation ordered by said Central Operating Unit (200) to/from an automatically guided vehicle (7,8,9), means for registering the identification of the pallets loaded/unloaded in said operation and communication means for sending to said Central Operation Unit (200) messages (251) regarding the suitability of said docks (20, 21, 22) for a new operation and messages (252) regarding the identification of the pallets involved in said operation;
(d) sensing means (122, 132, 161; 60) for detecting the presence/absence of pallets in said delivery/reception devices (10, 11, 12, 13, 14) and docks (20, 21, 22) connected to said Management and Control Units (125, 135; 165) and said Central Operation Unit (200);
(e) processing and storage means (300) in said Central Operation Unit (200) to record all the changes of physical location of the pallets involved in said movements.

2. A computerised system for handling palletised goods in a plant or distribution centre according to claim 1, wherein said messages.(220, 221) regarding movement orders issued by the Central Operating Unit to the Management and Control Unit (175) of the fleet of automatically guided vehicles (7, 8, 9) includes the origin and destination of the movement and at least one field indicating the execution status of the order.

3. A computerised system for handling palletised goods in a plant or distribution centre according to claim 2, wherein the Central Operation Unit (200) sends messages to the automatically guided vehicles (7,8,9) confirming/rejecting the loading/unloading operation at the destination of a movement according to the information provided by said sensing means (122, 132, 161; 60).

4. A computerised system for handling palletised goods in a plant or distribution centre according to claims 2. or 3, wherein the identification of the origin and destinations of said automatically guided vehicle movements is carried out by a procedure including the following steps:
(a) identifying the movement requirements from the suitability information sent by the Management and Control Units (165; 125, 135) of said second and third subsystem to the Central Operation Unit (200); and
(b) determining the origin/destination of the movements identified in step (a) by applying pre-established logistic rules.

5. A computerised system for handling palletised goods in a plant or distribution centre according to claim 4, wherein said processing means (300) of said Central Operation Unit (200) determine the origin/destination of a movement from/towards temporary storage areas (15, 16, 17, 18, 19) using a pre-programmed configuration of said storage areas as lanes assigned for pallets of the same type of goods with several locations identified by means of co-ordinates and information regarding the existence or absence of pallets in said locations.

6. _{.}- A computerised system for handling palletised goods in a plant or distribution centre according to claim 5, wherein said processing means (300) of the Central Operation Unit (200) may modify said pre-programmed configuration of the temporary storage areas (15, 16, 17, 18, 19), changing the lanes assigned to each type of goods.

7. A computerised system for handling palletised goods in a plant or distribution centre according to any of the preceding claims, wherein the recording of the changes of physical location of the pallets involved in each operation movement is carried out by a procedure including the following steps:
(a) reception and storage in a secondary memory of the Central Operation Unit (200) of the information contained in labels stuck to the pallets, provided by reading means (121, associated, respectively, to the delivery devices (10, 11, 13) of the palletised goods produced in the plant and to the loading docks (20, 21, 22); and
(b) reception and storage by the Central Operation Unit (200) in the mentioned secondary memory of the destinations of all the pallet movements really made by the automatically guided vehicles (7, 8, 9) and by the loading/unloading docks (20, 21, 22).

8. A computerised system for handling palletised goods in a plant or distribution centre according to any of the preceding claims, wherein the delivery/reception devices (10, 11, 12) consist of pilers/unpilers (50, 55) which pile/unpile pallets in/of groups of a predetermined number of units for each type of goods in/from delivery/reception trays (52, 57).

9. A computerised system for handling palletised goods in a plant or distribution centre according to any of the preceding claims, wherein the Management and Control Units (125, 135) which control said pilers/unpilers (50, 55) have means to perform a piling/unpiling cycle and provide messages regarding their status according to the progress of the mentioned cycle.

10. A computerised system for handling palletised goods in a plant or distribution centre according to any of the preceding claims, wherein the loading docks (20, 21, 22) consist of entry/exit carriers (60) pre-loading/post-unloading bays (61) and loading/unloading forks (62).

11. A computerised system for handling palletised goods in a plant or distribution centre according to any of the preceding claims, wherein the Management and Control Units (165) controlling the loading/unloading docks (20, 21, 22) have means to perform a loading/unloading cycle providing messages to the Central Operation Unit (200) regarding the start and termination of the operations performed on the entry/exit carriers (60), the pre-loading/post-loading bays (61) and the loading/unloading forks (62).

12. A computerised system for handling palletised goods in a plant or distribution centre according to any of the preceding claims, wherein the loading/unloading docks (20, 21, 22) are formed by a loading route consisting of an entry carrier (71), a preloading bay (72) and a loading fork (73) and a parallel unloading route consisting of an exit carrier (75), a post-unloading bay (76) and an unloading fork (77).

13. A computerised system for handling palletised goods in a plant or distribution centre according to any of the preceding claims, wherein the Management and Control Units (165) to control the loading/unloading docks (20, 21, 22) have means to start an unloading cycle from a truck by means of its unloading with the fork (77) and immediately after, to terminate a loading cycle by loading the truck with the fork (73) providing messages to the Central Operation Unit (200) regarding the start and termination of all the operations made on the entry carrier (71), the preloading bay (72), the loading fork (73), the exit carrier (75), the post-unloading bay (76) and the unloading fork (77).

## Patentansprüche

1. Computergestütztes System zum Umschlag palletierter Güter in einem Betrieb oder Vertriebszentrum mit einem ersten Teilsystem, das aus einer Flotte automatisch geführter Fahrzeuge (7, 8, 9) besteht, die durch eine Verwaltungs- und Steuereinheit (175) gesteuert werden, einem zweiten Teilsystem, das aus mehreren Abgabe-/Aufnahmevorrichtungen (10, 11, 12, 13, 14) der palletierten Güter auf/von den automatisch geführten Fahrzeugen (7, 8, 9) besteht, und einem dritten Teilsystem, das aus mehreren Belade-/Entladedocks (20, 21, 22) besteht, die mindestens eine automatische Belade-/ Entladevorrichtung (23, 24, 25) zum Beladen/Entladen eines Wagens oder einer anderen Art von Fahrzeug in einem einzelnen Vorgang sowie Eingangs-/Ausgangsträger (26, 27, 28) für die Zufuhr/Abfuhr von Gütern zu/von dieser Vorrichtung aufweisen, **dadurch gekennzeichnet, daß** es aufweist:
(a) eine Zentralbetriebseinheit (200) mit einer Verarbeitungseinrichtung (300), um Meldungen (220) über Bewegungsaufträge zur Verwaltungs- und Steuereinheit (175) der Flotte automatisch geführter Fahrzeuge (7, 8, 9) zum Durchführen aller Belade-/Entladevorgänge zu senden, die an Abgabe-/Aufnahmevorrichtungen (10, 11, 12, 13, 14) und Docks (20, 21, 22) notwendig sind, u. a. Bewegungen zu Zwischenlagerflächen (15, 16, 17, 18, 19), und um Meldungen (221) über die Ausführung der Bewegungsaufträge zu empfangen;
(b) Verwaltungs- und Steuereinheiten (125, 135) der Abgabe-/Aufnahmevorrichtungen (10, 11, 12, 13, 14) mit einer Einrichtung zum Registrieren jedes durch die Zentralbetriebseinheit (200) beauftragten Belade-/Entladevorgangs auf/von einem automatisch geführten Fahrzeug (7, 8, 9), einer Einrichtung zum Registrieren der Identifizierung der im Vorgang beladenen/entladenen Paletten und einer Kommunikationseinrichtung zum Senden von Meldungen (231, 240) zur Zentralbetriebseinheit (200) über die Eignung der Vorrichtungen (10, 11, 12, 13, 14) für neue Belade-/Entladevorgänge sowie Meldungen (230) über die Identifizierung der am Vorgang beteiligten Paletten;
(c) Verwaltungs- und Steuereinheiten (165) der Docks (29, 21, 22) mit einer Einrichtung zum Registrieren jedes durch die Zentralbetriebseinheit (200) beauftragten Belade-/Entladevorgangs auf/von einem automatisch geführten Fahrzeug (7, 8, 9), einer Einrichtung zum Registrieren der Identifizierung der im Vorgang beladenen/entladenen Paletten und einer Kommunikationseinrichtung zum Senden von Meldungen (251) zur Zentralbetriebseinheit (200) über die Eignung der Docks (20, 21, 22) für einen neuen Vorgang sowie Meldungen (252) über die Identifizierung der am Vorgang beteiligten Paletten;
(d) eine Erfassungseinrichtung (122, 132, 161; 60) zum Erfassen des Vorhandenseins/Fehlens von Paletten in den Abgabe-/Aufnahmevorrichtungen (10, 11, 12, 13, 14) und Docks (20, 21, 22), die mit den Verwaltungs- und Steuereinheiten (125, 135; 165) und der Zentralbetriebseinheit (200) verbunden ist;
(e) eine Verarbeitungs- und Speichereinrichtung (300) in der Zentralbetriebseinheit (200), um alle Änderungen des Standorts der an den Bewegungen beteiligten Paletten zu protokollieren.

2. Computergestütztes System zum Umschlag palletierter Güter in einem Betrieb oder Vertriebszentrum nach Anspruch 1, wobei die Meldungen (220, 221) über Bewegungsaufträge, die durch die Zentralbetriebseinheit zur Verwaltungs- und Steuereinheit (175) der Flotte automatisch geführter Fahrzeuge (7, 8, 9) ausgegeben werden, den Ursprung und das Ziel der Bewegung sowie mindestens ein Feld aufweisen, das den Ausführungsstatus des Auftrags anzeigt.

3. Computergestütztes System zum Umschlag palletierter Güter in einem Betrieb oder Vertriebszentrum nach Anspruch 2, wobei die Zentralbetriebseinheit (200) Meldungen zu den automatisch geführten Fahrzeugen (7, 8, 9) sendet, die den Belade-/Entladevorgang am Ziel einer Bewegung gemäß den Informationen bestätigen/verwerfen, die durch die Erfassungseinrichtung (122, 132, 161; 60) bereitgestellt werden.

4. Computergestütztes System zum Umschlag palletierter Güter in einem Betrieb oder Vertriebszentrum nach Anspruch 2 oder 3, wobei die Identifizierung des Ursprungs und Ziels der automatisch geführten Fahrzeugbewegungen durch ein Verfahren mit den folgenden Schritten durchgeführt wird:
(a) Identifizieren der Bewegungsanforderungen anhand der Eignungsinformationen, die durch die Verwaltungs- und Steuereinheiten (165; 125, 135) des zweiten und dritten Teilsystems zur Zentralbetriebseinheit (200) gesendet werden; und
(b) Bestimmen des Ursprungs/Ziels der im Schritt (a) identifizierten Bewegungen durch Anwenden vorab erstellter Logistikregeln.

5. Computergestütztes System zum Umschlag palletierter Güter in einem Betrieb oder Vertriebszentrum nach Anspruch 4, wobei die Verarbeitungseinrichtung (300) der Zentralbetriebseinheit (200) den Ursprung/das Ziel einer Bewegung von/zu Zwischenlagerflächen (15, 16, 17, 18, 19) unter Verwendung einer vorprogrammierten Konfiguration der Lagerflächen als Spuren bestimmt, die Paletten der gleichen Art von Gütern zugewiesen sind, wobei mehrere Standorte mittels Koordinaten und Informationen über das Vorhandensein oder Fehlen von Paletten an den Standorten identifiziert werden.

6. Computergestütztes System zum Umschlag palletierter Güter in einem Betrieb oder Vertriebszentrum nach Anspruch 5, wobei die Verarbeitungseinrichtung (300) der Zentralbetriebseinheit (200) die vorprogrammierte Konfiguration der Zwischenlagerflächen (15, 16, 17, 18, 19) modifizieren kann, wobei sie die jeder Art von Gütern zugewiesenen Spuren ändert.

7. Computergestütztes System zum Umschlag palletierter Güter in einem Betrieb oder Vertriebszentrum nach einem der vorstehenden Ansprüche, wobei das Protokollieren der Standortänderungen der an jeder Betriebsbewegung beteiligten Paletten durch ein Verfahren durchgeführt wird, das die folgenden Schritte aufweist:
(a) Empfangen und Speichern der Informationen in einem sekundären Speicher der Zentralbetriebseinheit (200), die auf Etiketten enthalten sind, die an die Paletten geklebt sind, und die durch eine Leseeinrichtung (121) bereitgestellt werden, die den Abgabevorrichtungen (10, 11, 13) der im Betrieb produzierten palettierten Güter bzw. den Beladedocks (20, 21, 22) zugeordnet ist; und
(b) Empfangen und Speichern der Ziele aller Palettenbewegungen durch die Zentralbetriebseinheit (200) in diesem sekundären Speicher, die durch die automatisch geführten Fahrzeuge (7, 8, 9) und durch die Belade-/Entladedocks (20, 21, 22) tatsächlich vollführt werden.

8. Computergestütztes System zum Umschlag palletierter Güter in einem Betrieb oder Vertriebszentrum nach einem der vorstehenden Ansprüche, wobei die Abgabe-/Aufnahmevorrichtungen (10, 11, 12) aus Aufstaplern/Abstaplern (50, 55) bestehen, die Paletten zu/aus Gruppen einer vorbestimmten Anzahl von Einheiten für jede Art von Gütern in/aus Abgabe-/Aufnahmeböden (52, 57) aufstapeln/abstapeln.

9. Computergestütztes System zum Umschlag palletierter Güter in einem Betrieb oder Vertriebszentrum nach einem der vorstehenden Ansprüche, wobei die Verwaltungs- und Steuereinheiten (125, 135), die die Aufstapler/Abstapler (50, 55) steuern, eine Einrichtung haben, um einen Aufstapel-/Abstapelzyklus durchzuführen und Meldungen über ihren Status gemäß dem Fortschritt dieses Zyklus bereitzustellen.

10. Computergestütztes System zum Umschlag palletierter Güter in einem Betrieb oder Vertriebszentrum nach einem der vorstehenden Ansprüche, wobei die Beladedocks (20, 21, 22) aus Eingangs-/Ausgangsträgern (60), Vorbelade-/Nachentladebuchten (61) und Belade-/Entladegabeln (62) bestehen.

11. Computergestütztes System zum Umschlag palletierter Güter in einem Betrieb oder Vertriebszentrum nach einem der vorstehenden Ansprüche, wobei die Verwaltungs- und Steuereinheiten (165), die die Belade-/Entladedocks (20, 21, 22) steuern, eine Einrichtung haben, um einen Belade-/Entladezyklus durchzuführen, wobei Meldungen zur Zentralbetriebseinheit (200) über den Beginn und Abschluß der Vorgänge bereitgestellt werden, die an den Eingangs-/Ausgangsträgern (60), Vorbelade-/Nachentladebuchten (61) und Belade-/Entladegabeln (62) durchgeführt werden.

12. Computergestütztes System zum Umschlag palletierter Güter in einem Betrieb oder Vertriebszentrum nach einem der vorstehenden Ansprüche, wobei die Belade-/Entladedocks (20, 21, 22) durch eine Beladeroute, die aus einem Eingangsträger (71), einer Vorbeladebucht (72) und einer Beladegabel (73) besteht, und eine parallele Entladeroute gebildet sind, die aus einem Ausgangsträger (75), einer Nachentladebucht (76) und einer Entladegabel (77) besteht.

13. Computergestütztes System zum Umschlag palletierter Güter in einem Betrieb oder Vertriebszentrum nach einem der vorstehenden Ansprüche, wobei die Verwaltungs- und Steuereinheiten (165), um die Belade-/Entladedocks (20, 21, 22) zu steuern, eine Einrichtung haben, um einen Entladezyklus von einem Wagen mittels seines Entladens mit der Gabel (77) zu beginnen und unmittelbar danach einen Ladezyklus durch Beladen des Wagens mit der Gabel (73) abzuschließen, wobei Meldungen zur Zentralbetriebseinheit (200) über den Beginn und Abschluß aller am Eingangsträger (71), an der Vorbeladebucht (72), an der Beladegabel (73), am Ausgangsträger (75), an der Nachentladebucht (76) und an der Entladegabel (77) durchgeführten Vorgänge bereitgestellt werden.

## Revendications

1. Système informatisé de manipulation de marchandises palettisées dans une usine ou un centre de distribution comportant un premier sous-système constitué d'une flotte de véhicules à guidage automatique (7, 8, 9) contrôlés par une Unité de Gestion et de Commande (175), un deuxième sous-système constitué de plusieurs dispositifs de livraison/réception (10, 11, 12, 13, 14) desdites marchandises palettisées auxdits/desdits véhicules à guidage automatique (7, 8, 9) et un troisième sous-système constitué de plusieurs quais de chargement/déchargement (20, 21, 22), qui comprennent, au moins, un dispositif de chargement/déchargement automatique (23, 24, 25) pour charger/décharger un camion ou autre type de véhicule en une seule opération et des supports d'entrée/sortie (26, 27, 28) pour envoyer/évacuer des marchandises à/du dispositif mentionné, **caractérisé en ce qu'**il comprend :
(a) une Unité Centrale d'Exploitation (200) comportant un moyen de traitement (300) pour envoyer des messages (220) concernant des ordres de mouvement à l'Unité de Gestion et de Commande (175) de la flotte de véhicules à guidage automatique (7, 8, 9) pour exécuter toutes les opérations de chargement/déchargement nécessaires au niveau des dispositifs de livraison/réception (10, 11, 12, 13, 14) et des quais (20, 21, 22), y compris des mouvements jusqu'à des zones de stockage temporaire (15, 16, 17, 18, 19), et pour recevoir des messages (221) concernant l'exécution desdits ordres de mouvement.
(b) des Unités de Gestion et de Commande (125, 135) desdits dispositifs de livraison/réception (10, 11, 12, 13, 14) comportant un moyen servant à enregistrer chaque opération de chargement/déchargement ordonnée par ladite Unité Centrale d'Exploitation (200) sur/depuis un véhicule à guidage automatique (7, 8, 9), un moyen servant à enregistrer l'identification des palettes chargées/déchargées lors de ladite opération et un moyen de communication pour envoyer à ladite Unité Centrale d'Exploitation (200) des messages (231, 240) concernant le caractère approprié desdits dispositifs (10, 11, 12, 13, 14) pour de nouvelles opérations de chargement/déchargement et des messages (230) concernant l'identification des palettes impliquées dans ladite opération ;
(c) des Unités de Gestion et de Commande (165) desdits quais (20, 21, 22) comportant un moyen servant à enregistrer chaque opération de chargement/déchargement ordonnée par ladite Unité Centrale d'Exploitation (200) sur/depuis un véhicule à guidage automatique (7, 8, 9), un moyen servant à enregistrer l'identification des palettes chargées/déchargées lors de ladite opération et un moyen de communication pour envoyer à ladite Unité Centrale d'Exploitation (200) des messages (251) concernant le caractère approprié desdits quais (20, 21, 22) pour une nouvelle opération et des messages (252) concernant l'identification des palettes impliquées dans ladite opération ;
(d) des moyens de détection (122, 132, 161 ; 60) pour détecter la présence/absence de palettes dans lesdits dispositifs de livraison/réception (10, 11, 12, 13, 14) et sur les quais (20, 21, 22) reliés auxdites Unités de Gestion et de Commande (125, 135 ; 165) et à ladite Unité Centrale d'Exploitation (200) ;
(e) un moyen de traitement et de stockage (300) dans ladite Unité Centrale d'Exploitation (200) pour enregistrer tous les changements de position physique des palettes impliquées dans lesdits mouvements.

2. Système informatisé de manipulation de marchandises palettisées dans une usine ou un centre de distribution selon la revendication 1, dans lequel lesdits messages (220, 221) concernant les ordres de mouvement transmis par l'Unité Centrale d'Exploitation à l'Unité de Gestion et de Commande (175) de la flotte de véhicules à guidage automatique (7, 8, 9) comprennent l'origine et la destination du mouvement et au moins un champ indiquant l'état d'exécution de l'ordre.

3. Système informatisé de manipulation de marchandises palettisées dans une usine ou un centre de distribution selon la revendication 2, dans lequel l'Unité Centrale d'Exploitation (200) envoie des messages aux véhicules à guidage automatique (7, 8, 9) confirmant/rejetant l'opération de chargement/déchargement à l'endroit de la destination d'un mouvement selon l'information fournie par lesdits moyens de détection (122, 132, 161 ; 60).

4. Système informatisé de manipulation de marchandises palettisées dans une usine ou un centre de distribution selon la revendication 2 ou 3, dans lequel l'identification de l'origine et de la destination des mouvements desdits véhicules à guidage automatique est effectuée par une procédure qui comprend les étapes consistant à :
(a) identifier les nécessités de mouvement à partir de l'information du caractère approprié envoyée par les Unités de Gestion et de Commande (165 ; 125, 135) desdits deuxième et troisième sous-systèmes à l'Unité Centrale d'Exploitation (200) ; et
(b) déterminer l'origine/destination des mouvements identifiés à l'étape (a) en appliquant des règles de logistique préétablies.

5. Système informatisé de manipulation de marchandises palettisées dans une usine ou un centre de distribution selon la revendication 4, dans lequel ledit moyen de traitement (300) de ladite Unité Centrale d'Exploitation (200) détermine l'origine/destination d'un mouvement de/vers les zones de stockage temporaire (15, 16, 17, 18, 19) en utilisant une configuration préprogrammée desdites zones de stockage sous forme de voies affectées aux palettes ayant le même type de marchandises avec plusieurs emplacements identifiés au moyen de coordonnées et une information concernant l'existence ou l'absence de palettes sur lesdits emplacements.

6. Système informatisé de manipulation de marchandises palettisées dans une usine ou un centre de distribution selon la revendication 5, dans lequel ledit moyen de traitement (300) de l'Unité Centrale d'Exploitation (200) peut modifier ladite configuration préprogrammée des zones de stockage temporaire (15, 16, 17, 18, 19), en changeant les voies affectées à chaque type de marchandises.

7. Système informatisé de manipulation de marchandises palettisées dans une usine ou un centre de distribution selon l'une quelconque des revendications précédentes, dans lequel l'enregistrement des changements de position physique des palettes impliquées dans chaque opération de mouvement est effectué par une procédure qui comprend les étapes suivantes :
(a) réception et stockage dans une mémoire secondaire de l'Unité Centrale d'Exploitation (200) de l'information contenue dans des étiquettes collées sur les palettes, fournie par des moyens de lecture (121) associés respectivement aux dispositifs de livraison (10, 11, 13) des marchandises palettisées produites dans l'usine et aux quais de chargement (20, 21, 22) ; et
(b) réception et stockage par l'Unité Centrale d'Exploitation (200), dans la mémoire secondaire mentionnée, des destinations de tous les mouvements de palette réellement effectués par les véhicules à guidage automatique (7, 8, 9) et par les quais de chargement/déchargement (20, 21, 22).

8. Système informatisé de manipulation de marchandises palettisées dans une usine ou un centre de distribution selon l'une quelconque des revendications précédentes, dans lequel les dispositifs de livraison/réception (10, 11, 12) sont constitués d'empileuses/désempileuses (50, 55) qui empilent/désempilent les palettes en/de groupes d'un nombre d'unités prédéterminé pour chaque type de marchandises dans/de plateaux de livraison/réception (52, 57).

9. Système informatisé de manipulation de marchandises palettisées dans une usine ou un centre de distribution selon l'une quelconque des revendications précédentes, dans lequel les Unités de Gestion et de Commande (125, 135) qui contrôlent lesdites empileuses/désempileuses (50, 55) comportent un moyen servant à exécuter un cycle d'empilage/désempilage et fournissent des messages concernant leur état selon l'état d'avancement du cycle mentionné.

10. Système informatisé de manipulation de marchandises palettisées dans une usine ou un centre de distribution selon l'une quelconque des revendications précédentes, dans lequel les quais de chargement (20, 21, 22) sont constitués de supports d'entrée/sortie (60), de halls de pré-chargement/post-déchargement (61) et de fourches de chargement/déchargement (62).

11. Système informatisé de manipulation de marchandises palettisées dans une usine ou un centre de distribution selon l'une quelconque des revendications précédentes, dans lequel les Unités de Gestion et de Commande (165) qui contrôlent les quais de chargement/déchargement (20, 21, 22) comportent un moyen servant à exécuter un cycle de chargement/déchargement en fournissant des messages à l'Unité Centrale d'Exploitation (200) qui concernent le début et la fin des opérations effectuées sur les supports d'entrée/sortie (60), les halls de pré-chargement/post-déchargement (61) et les fourches de chargement/déchargement (62).

12. Système informatisé de manipulation de marchandises palettisées dans une usine ou un centre de distribution selon l'une quelconque des revendications précédentes, dans lequel les quais de chargement/déchargement (20, 21, 22) sont formés par un itinéraire de chargement constitué d'un support d'entrée (71), d'un hall de pré-chargement (72) et d'une fourche de chargement (73) et un itinéraire de déchargement parallèle constitué d'un support de sortie (75), d'un hall de post-déchargement (76) et d'une fourche de déchargement (77).

13. Système informatisé de manipulation de marchandises palettisées dans une usine ou un centre de distribution selon l'une quelconque des revendications précédentes, dans lequel les Unités de Gestion et de Commande (165), pour contrôler les quais de chargement/déchargement (20, 21, 22), comportent un moyen servant à démarrer un cycle de déchargement d'un camion par le biais de son déchargement avec la fourche (77) et immédiatement après, à finir un cycle de chargement en chargeant le camion avec la fourche (73) en envoyant des messages à l'Unité Centrale d'Exploitation (200) qui concernent le début et la fin de toutes les opérations effectuées sur le support d'entrée (71), le hall de pré-chargement (72), la fourche de chargement (73), le support de sortie (75), le hall de post-déchargement (76) et la fourche de déchargement (77).
